# EUROPÄISCHE PATENTSCHRIFT

(11) **EP 1 349 481 B1**
(45) Veröffentlichungstag und Bekanntmachung des Hinweises auf die Patenterteilung: **17.03.2010**
(21) Anmeldenummer: 01272636.0
(22) Anmeldetag: 05.12.2001
(51) Int. Cl.: A47L 15/42, D06F 39/10, B01D 29/03

(54) **SIEB**
SIEVE
TAMIS

(30) Priorität: 29.12.2000 DE 10065661
(43) Veröffentlichungstag der Anmeldung: 08.10.2003
(73) Patentinhaber: BSH Bosch und Siemens Hausgeräte GmbH, 81739 München (DE)
(72) Erfinder: JERG, Helmut, 89537 Giengen (DE)
(86) Internationale Anmeldenummer: PCT/EP2001/014300
(87) Internationale Veröffentlichungsnummer: WO 2002/053010

(56) Entgegenhaltungen:
- DE-A- 2 945 929
- FR-A- 2 328 498
- US-A- 3 122 148
- US-A- 3 179 116
- US-A- 5 176 884
- US-A- 5 554 284

## Beschreibung

Die Erfindung betrifft ein Sieb, bei dem der Durchtrittsquerschnitt seiner Sieböffnungen in Abhängigkeit von einer dem das Sieb durchsetzenden Medium innewohnenden Größe selbsttätig veränderbar ist.

Siebe werden in der Technik an vielen Stellen oder bei vielen Prozessen eingesetzt, um eine Abtrennung von Teilen, die in einem das Sieb durchsetzenden Medium enthalten sind, zu erreichen. So werden insbesondere in Geschirrspülmaschinen Siebe eingesetzt um Speisereste, die in der Spülflotte mitgeführt werden, abzusondern. Bei Geschirrspülmaschinen besteht dabei das besondere Problem, dass die abgesonderten Speisereste wieder von dem Sieb entfernt werden müssen.

Zur Lösung dieses Problems sind bei einem durch die DE-A1-29 45 929 bekannten, selbstreinigenden Sieb zwei mit parallelen Längsschlitzen versehene Scheiben vorgesehen, die einerseits in Bezug auf die Schlitzrichtung um 90° gegeneinander versetzt und andererseits axial beweglich zueinander angeordnet sind. In der einen Stellung liegen die Scheiben aneinander an, so dass durch die sich kreuzenden Längsschlitze kleine quadratische Durchtrittsöffnungen gebildet sind, durch die ein Zurückhalten von Teilen bewirkt wird, die größer als der Durchtrittsquerschnitt dieser kleinen Durchtrittsöffnungen sind. Ein Reinigen des Siebes wird dadurch erreicht, dass durch eine Änderung der Strömungsrichtung zumindest die eine Siebscheibe gegenüber der anderen Siebscheibe axial verschoben wird, so dass nunmehr die Längsschlitze die Durchtrittsöffnungen bilden. Durch diese im Querschnitt wesentlich größeren Längsschlitze können die zuvor abgesonderten Teile abgeführt werden, so dass das Sieb wieder frei wird. Ein solcher Aufbau eines Siebes ist konstruktiv aufwendig. Außerdem besteht die Gefahr des Verklemmens der beweglich angeordneten Siebscheiben und zur Durchführung des Reinigungsvorganges ist eine Änderung der Strömungsrichtung des das Sieb durchsetzenden Mediums notwendig.

Bei der US 3,179,116 wird für die Reinigung der Spülflotte einer Geschirrspülmaschine ein selbstreinigendes, variables Filter in Form einer helixförmigen Feder verwendet, wobei der Abstand zwischen deren Faltungen mit Hilfe des Flüssigkeitsdrucks der Spülflotte angepasst wird, um den Filterungsgrad einzustellen.

Der Erfindung liegt die Aufgabe zugrunde, ein Sieb zu schaffen, welches diese Nachteile nicht mehr aufweist.

Die Lösung der gestellten Aufgabe gelingt nach der Erfindung dadurch, dass die Sieböffnungen durch Mittel verdeckt oder überdeckt sind, deren Lage gegenüber den Sieböffnungen unter dem Einfluss der Wärme des das Sieb durchsetzenden Mediums veränderbar ist.

Um bei einem solchen Sieb beispielsweise eine Reinigung vornehmen zu können, muss lediglich die betreffende dem durch das Sieb strömenden Medium innewohnende Größe verändert werden. Die durch eine solche Veränderung bewirkte Querschnittsänderung der Sieböffnungen erlaubt ein Freispülen des Siebes von abgelagerten Teilen. Die Änderung einer dem Medium innewohnenden Größe, z.B. Temperatur oder Strömungsgeschwindigkeit, ist einfacher zu erreichen als eine Änderung der Strömungsrichtung. Mit der Erfindung ist ein Sieb geschaffen, welches die oben beschriebenen Nachteile nicht mehr aufweist.

Dadurch, dass die Sieböffnungen durch Mittel verdeckt oder überdeckt sind, deren Lage gegenüber den Sieböffnungen unter dem Einfluss der Wärme des das Sieb durchsetzenden Mediums veränderbar ist, kann in Abhängigkeit von der Temperatur des das Sieb durchströmenden Mediums der Durchtrittsquerschnitt der Sieböffnungen beeinflusst werden. Da bei vielen technischen Prozessen ohnehin ein Temperaturwechsel bei dem das Sieb durchsetzenden Medium auftritt, ergibt sich die Reinigung des Siebes praktisch zwangsläufig.

Eine konstruktiv besonders einfache Ausbildung des Siebes ergibt sich insbesondere dadurch, dass nach einer vorteilhaften Weiterbildung das Mittel ein Lochblech mit, etwa gleicher Lochung wie die eines Siebbleches ist, wobei das Lochblech unter dem Einfluss der Wärme des das Sieb durchsetzenden Mediums mittels Elementen auf dem Siebblech verschoben wird. Das Lochblech wird bei einer bestimmten Temperatur des das Sieb durchsetzenden Mediums in eine mit den Öffnungen des Siebblechs etwa deckungsgleiche Stellung verschoben, wodurch sich eine Vergrößerung des Durchtrittsquerschnitts ergibt.

Zweckmäßigerweise sind die Elemente Federelemente, die unter dem Einfluss der Wärme des das Sieb durchsetzenden Mediums in der effektiven Länge verändert werden. Durch den Einsatz von sich selbsttätig verstellenden Federelementen wird eine weitere Vereinfachung des konstruktiven Aufbaus erreicht.

In besonders vorteilhafter Weise bestehen die Elemente aus einer Formgedächtnislegierung. Derartige Legierungen ändern beispielsweise unter dem Einfluss von Wärme ihre Form oder Lage. D.h. beim Erreichen einer bestimmten Temperatur nehmen sie eine andere Form an oder eine andere Lage ein und kehren wieder in ursprüngliche Form oder Lage zurück, wenn wieder die ursprüngliche Temperatur herrscht. Da bei vielen technischen Prozessen ohnehin ein Temperaturwechsel bei dem das Sieb durchsetzenden Medium auftritt, ergibt sich die Reinigung des Siebes somit praktisch zwangsläufig.

Eine konstruktiv besonders einfache Ausbildung des Siebes ergibt sich dadurch, dass die Federelemente sich einerseits genen einen feststehenden Rand und andererseits gegen einen Rand des Lochblechs abstützen, wodurch besondere, zusätzliche Befestigungsmittel vermieden werden.

Nach einer bevorzugten Ausführungsform der Erfindung ist ein Element an dem Lochblech befestigt, wodurch die Längenänderung des Elementes direkt auf das Lochblech als Änderung der Lage des Lochbleches übertragen wird.

Eine weitere, konstruktiv noch einfachere Ausführungsform des Siebes ist dadurch gekennzeichnet, dass einem Element eine an einer gegenüberliegenden Seite des Siebs angeordnete Rückstellfeder zugeordnet ist, wodurch eine Befestigung am Lochblech entfallen kann und die Verschiebung des Lochbleches dann einerseits durch ein Elemente und andererseits durch eine aus üblichem Material hergestellte Rückstellfeder verursacht wird.

Ein Sieb der vorbeschriebenen Art lässt sich mit besonderen Vorteilen in einer Geschirrspülmaschine verwenden. In einer Geschirrspülmaschine dient das Sieb zum Ausfiltern von in der Spülflotte enthaltenen Speiseresten. Dabei ist es notwendig, dass abgelagerte Speisereste während des Ablaufes des Spülprogramms gelegentlich von dem Sieb abgespült werden. Da die Spülflotte während der einzelnen Spülvorgänge, z.B. Vorspülen, Reinigen, Zwischenspülen, Klarspülen, eine unterschiedliche Temperatur aufweist, ergeben sich bei einer temperaturabhängigen Veränderung der Durchtrittsquerschnitte während des Ablaufes des Spülprogramms Abschnitte, in denen der Querschnitt der Sieböffnungen soweit vergrößert ist, dass abgelagerte Speisereste durch die Sieböffnungen hindurch abgeführt werden können. Es tritt somit zwangsläufig eine Selbstreinigung des Siebes auf.

Anhand der in der Zeichnung dargestellten Ausführungsbeispiele wird die Erfindung nachfolgend noch näher erläutert.
Es zeigen:
- Figur 1: plattenförmig ausgebildete Siebbleche, die durch ein Lochblech abgedeckt ist, das nach einer bevorzugten Ausführungsform der Erfindung mit nur einem Federelement bewegt wird,
- Figur 2: eine weitere Ausführungsform der Erfindung bei der das Lochblech mit zwei Federelementen bewegt wird,
- Figur 3: einen Teilquerschnitt des Siebes in einem Zustand, bei dem die Sieböffnungen vollständig geöffnet sind,
- Figur 4: eine Draufsicht auf eine Sieböffnung des Siebes in der Lage nach Figur 3,
- Figur 5: einen Teilquerschnitt des Siebes in einem Zustand, bei dem die Sieböffnungen einen gewünschten Siebquerschnitt einnehmen und
- Figur 6: eine Draufsicht auf eine Sieböffnung des Siebes in der Lage nach Figur 5.

Die Ausführungsbeispiele werden am Beispiel eines Siebes 1 einer nicht näher beschrieben Geschirrspülmaschine erläutert. Gleiche Teile erhalten gleiche Bezugszeichen.

Das Sieb 1 weist einen plattenförmigen Körper 2 auf. Dieser plattenförmige Körper 2 trägt in den gezeigten Ausführungsbeispielen zwei Siebbleche 3. Der plattenförmige Körper 2 wird durch ein Lochblech 5 mit etwa gleicher Lochung wie die eines Siebbleches 3, im Ausführungsbeispiel mit etwa gleicher Lochung wie die der beiden Siebbleche 3, überdeckt.

Erfindungsgemäß ist der Durchtrittsquerschnitt der Sieböffnungen 4 in Abhängigkeit von einer dem das Sieb 1 durchsetzenden Medium innewohnenden Größe selbsttätig veränderbar. Dies wird in den gezeigten Ausführungsbeispielen dadurch erreicht, dass das Lochblech 5 unter dem Einfluss der Wärme des das Sieb 1 durchsetzenden Mediums, bei einer Geschirrspülmaschine der das Sieb 1 durchsetzenden Spülflüssigkeit, mittels Elementen 7 auf dem Siebblech 3, im den gezeigten Ausführungsbeispielen horizontal auf dem gesamten plattenförmigen Körper 2, verschoben wird, womit die Sieböffnungen 4 durch das Lochblech 5 wenigstens teilweise verdeckt oder durch dessen Durchtrittsöffnungen 6 geöffnet werden.

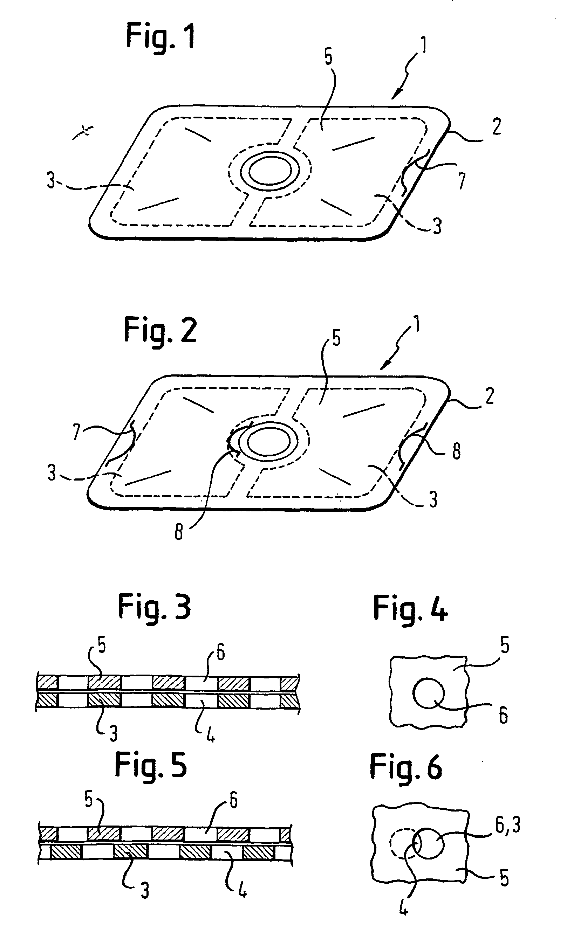

Die das Lochblech 5 verschiebenden Elemente 7 sind Federelemente, die unter dem Einfluss der Wärme des das Sieb 1 durchsetzenden Mediums in der effektiven Länge verändert werden, was dadurch erreicht wird, dass deren Material aus einer Formgedächtnislegierung besteht. Derartige Legierungen ändern beispielsweise unter dem Einfluss von Wärme ihre Form oder Lage. D.h. beim Erreichen einer bestimmten Temperatur nehmen sie eine andere Form an oder eine andere Lage ein und kehren wieder in ursprüngliche Form oder Lage zurück, wenn wieder die ursprüngliche Temperatur herrscht. Da bei vielen technischen Prozessen ohnehin ein Temperaturwechsel bei dem das Sieb durchsetzenden Medium auftritt, ergibt sich die Reinigung des Siebes somit praktisch zwangsläufig. So tritt bei einer bestimmten Temperatur ein Verbiegen dieser Federelemente 7 auf. Durch dieses Verbiegen der Federelemente 7 entsteht eine Vergrößerung der effektiven Länge der Federelemente 7 und damit wird das Lochblech 5 in eine Lage verschoben, bei der dessen Durchtrittsöffnungen 6 direkt in der gleichen Lage wie die darunter liegenden Sieböffnungen 4 liegen und diese nun vollständig geöffnet sind, wie es die Fig. 3 und 4 zeigt.

Bei einer anderen, beispielsweise höheren Temperatur nehmen Federelemente 7 eine Lage ein, in der sie praktisch eine Verkürzung der effektiven Länge der Federelemente 7 bewirken, wodurch das Lochblech 5 in eine Lage verschoben, bei der dessen Durchtrittsöffnungen 6 die darunter liegenden Sieböffnungen 4 teilweise überdecken, wie es die Fig. 5 und 6 zeigt. Damit verbleiben als Durchtrittsquerschnitte nur noch schmalen Schlitze, wie dies aus der Fig. 6 am besten zu ersehen ist. Da diese Schlitze sehr schmal sind, ca. 0,2 mm, können nur noch entsprechend kleine, von dem Medium mitgeführte Teile durch diese Schlitze hindurchtreten. In diesem Falle besitzt das Sieb 1 eine hohe Filterwirkung, d.h. es werden sehr viele Teile abgelagert. Tritt dann infolge einer Temperaturänderung das vorbeschriebene Verschieben des Lochblechs 5 ein, werden die abgelagerten Teile durch die vergrößerten Durchtrittsquerschnitte abgeführt und das Sieb 1 ist wieder frei.

Beiden gezeigten Ausführungsbeispielen ist gemeinsam, dass die Federelemente 7 sich einerseits gegen einen feststehenden Rand, in den gezeigten Ausführungsbeispielen gegen einen Rand des plattenförmigen Körpers 2 und andererseits gegen einen Rand des Lochblechs 5 abstützen, wodurch besondere, zusätzliche Befestigungsmittel vermieden werden.

Nach der in Fig. 1 gezeigten bevorzugten Ausführungsform ist nur ein Federelement 7 eingesetzt, das an dem Lochblech 5 befestigt ist, wodurch jede Änderung der effektiven Länge des Federelementes 7 direkt auf das Lochblech 5 als Änderung der Lage des Lochbleches 5 übertragen wird.

Nach der in Fig. 2 gezeigten weiteren Ausführungsform ist einem Federelement 7 eine an einer gegenüberliegenden Seiten des Siebs 1 angeordnete Rückstellfeder 8 zugeordnet, die aus üblichem Federstahl hergestellt ist, wodurch die vorbeschriebene Befestigung am Lochblech 5 entfallen kann. Die Verschiebung des Lochbleches 5 wird einerseits durch das Federelement 7 und andererseits durch die Rückstellfeder 8 verursacht, d.h. das Federelement 7 verschiebt das Lochblech 5 in die Lage nach Fig. 3 und 4 und die Rückstellfeder 8 verschiebt das Lochblech 5 in die Lage nach Fig. 5 und 6. Für die Rückstellfeder 8 sind in Fig. 2 alternative Anordnungen eingezeichnet, entweder an einem Rand eines mittigen Durchbruches des plattenförmigen Körpers 2 oder an einem Außenrand des plattenförmigen Körpers 2.

Ein Sieb 1 der vorbeschriebenen Art lässt sich mit besonderen Vorteilen in einer nicht näher beschrieben Geschirrspülmaschine verwenden. In einer Geschirrspülmaschine dient das Sieb 1 zum Ausfiltern von in der Spülflotte enthaltenen Speiseresten. Dabei ist es notwendig, dass abgelagerte Speisereste während des Ablaufes des Spülprogramms gelegentlich von dem Sieb 1 abgespült werden. Da die Spülflotte während der einzelnen Spülvorgänge, z.B. Vorspülen, Reinigen, Zwischenspülen, Klarspülen, eine unterschiedliche Temperatur aufweist, ergeben sich bei einer temperaturabhängigen Veränderung der Durchtrittsquerschnitte während des Ablaufes des Spülprogramms Abschnitte, in denen der Querschnitt der Sieböffnungen 4 soweit vergrößert ist, dass abgelagerte Speisereste durch die Sieböffnungen 4 hindurch abgeführt werden können. Es tritt somit zwangsläufig eine Selbstreinigung des Siebes 1 auf.

Mit der Erfindung ist ein Sieb geschaffen, welches die eingangs beschriebenen Nachteile des Standes der Technik nicht mehr aufweist.

## Patentansprüche

1. Sieb, bei dem der Durchtrittsquerschnitt seiner Sieböffnungen (4) in Abhängigkeit von einer dem das Sieb (1) durchsetzenden Medium innewohnenden Größe selbsttätig veränderbar ist,
**dadurch gekennzeichnet, dass** die Sieböffnungen (4) durch Mittel (5) verdeckt oder überdeckt sind, deren Lage gegenüber den Sieböffnungen (4) unter dem Einfluss der Wärme des das Sieb (1) durchsetzenden Mediums veränderbar ist.

2. Sieb nach Anspruch 1, **dadurch gekennzeichnet, dass** das Mittel ein Lochblech (5) mit etwa gleicher Lochung wie die eines Siebbleches (3) ist, wobei das Lochblech (5) unter dem Einfluss der Wärme des das Sieb (1) durchsetzenden Mediums mittels Elementen (7) auf dem Siebblech (3) verschoben wird.

3. Sieb nach Anspruch 1 oder 2, **dadurch gekennzeichnet, dass** die Elemente Federelemente (7) sind, die unter dem Einfluss der Wärme des das Sieb durchsetzenden Mediums in der effektiven Länge verändert werden.

4. Sieb nach Anspruch 2 oder 3, **dadurch gekennzeichnet**, das die Elemente (7) aus einer Formgedächtnislegierung bestehen.

5. Sieb nach einem der Ansprüche 2 bis 4, **dadurch gekennzeichnet, dass** die Federelemente (7) sich einerseits gegen einen feststehenden Rand und andererseits gegen einen Rand des Lochblechs (5) abstützen.

6. Sieb nach Anspruch 5, **dadurch gekennzeichnet, dass** ein Element (7) an dem Lochblech (5) befestigt.

7. Sieb nach Anspruch 5, **dadurch gekennzeichnet, dass** einem Element (7) eine an einer gegenüberliegenden Seite des Siebs (1) angeordnete Rückstellfeder (8) zugeordnet ist.

8. Geschirrspülmaschine mit einem Sieb nach einem der vorhergehenden Ansprüche.

## Claims

1. Filter, in which the passage cross-section of its filter openings (4) is automatically variable in dependence on a magnitude intrinsic to the medium passing through the filter (1), **characterised in that** the filter openings (4) are concealed or covered by means (5), the position of which is variable relative to the filter openings (4) under the influence of the heat of the medium passing through the filter (1).

2. Filter according to claim 1, **characterised in that** the means is an apertured plate (5) with approximately the same aperturing as that of a filter plate (3), wherein the apertured plate (5) is displaced by means of elements (7) on the filter plate (3) under the influence of the heat of the medium passing through the filter (1).

3. Filter according to claim 1 or 2, **characterised in that** the elements are spring elements (7) which are changed in the effective length under the influence of the heat of the medium passing through the filter.

4. Filter according to claim 2 or 3, **characterised in that** the elements (7) consist of a shape memory alloy.

5. Filter according any one of claims 2 to 4, **characterised in that** the spring elements (7) are supported on the one hand against a stationary edge and on the other hand against an edge of the apertured plate (5).

6. Filter according to claim 5, **characterised in that** an element (7) is fastened to the apertured plate (5).

7. Filter according to claim 5, **characterised in that** a restoring spring (8) arranged at an opposite side of the filter (1) is associated with an element (7).

8. Dishwashing machine with a filter according to any one of the preceding claims.

## Revendications

1. Filtre dans lequel la section de passage de ses ouvertures de filtre (4) est modifiable automatiquement en fonction d'une grandeur inhérente au médium traversant le filtre (1), **caractérisé en ce que** les ouvertures de filtre (4) est couvert ou recouvert par des moyens (5) dont la position par rapport aux ouvertures de filtre (4) est modifiable par l'influence de la chaleur du médium traversant le filtre (1).

2. Filtre selon la revendication 1, **caractérisé en ce que** le moyen est une tôle perforée (5) de perforation sensiblement égale à celle de la tôle de filtre (3), dans lequel la tôle perforée (5) est déplacée sur la tôle de filtre (3) par l'influence de la chaleur du médium traversant le filtre (1) au moyen d'éléments (7).

3. Filtre selon la revendication 1 ou 2, **caractérisé en ce que** les éléments sont des éléments à ressort (7) dont la longueur effective est modifiée par l'influence de la chaleur du médium traversant le filtre.

4. Filtre selon la revendication 2 ou 3, **caractérisé en ce que** les éléments (7) sont composés d'un alliage à mémoire de forme.

5. Filtre selon l'une des revendications 2 à 4, **caractérisé en ce que** les éléments à ressort (7) s'appuient d'une part contre un bord fixe et d'autre part contre un bord de la tôle perforée (5).

6. Filtre selon la revendication 5, **caractérisé en ce qu'**un élément (7) est fixé à la tôle perforée (5).

7. Filtre selon la revendication 5, **caractérisé en ce qu'**un ressort de rappel (8) disposé sur un côté opposé du filtre (1) est affecté à un élément (7).

8. Lave-vaisselle avec un filtre selon l'une des revendications précédentes.
